# EUROPÄISCHE PATENTSCHRIFT

(11) **EP 3 064 813 B1**
(45) Veröffentlichungstag und Bekanntmachung des Hinweises auf die Patenterteilung: **04.12.2019**
(21) Anmeldenummer: 16000519.5
(22) Anmeldetag: 04.03.2016
(51) Int. Cl.: F16K 15/02, E03C 1/10

(54) **RÜCKFLUSSVERHINDERER**
BACK FLOW PREVENTER
CLAPET ANTI-RETOUR

(30) Priorität: 06.03.2015 DE 102015002781
(43) Veröffentlichungstag der Anmeldung: 07.09.2016
(73) Patentinhaber: Grohe AG, 58675 Hemer (DE)
(72) Erfinder: Weiss, Martin, 58239 Schwerte (DE); Heubrock, Dominik, 59387 Ascheberg (DE)

(56) Entgegenhaltungen:
- WO-A1-93/01435
- WO-A1-02/079678
- DE-A1- 19 650 031
- DE-U1- 20 219 085

## Beschreibung

Die Erfindung betrifft einen Rückflussverhinderer zur Installation in einer Flüssigkeitsleitung nach dem Oberbegriff des Patentanspruches 1.

Ein derartiger Rückflussverhinderer wird in einer Wasserleitung eingesetzt, um eine Rückströmung des Wassers entgegen einer regelmäßigen Durchflussrichtung zu verhindern. Die Installation von Rückflussverhinderern in den Kalt- und Warmwasserzuläufen von Thermostatventilen ist gängige Praxis. Dabei ergibt sich jedoch das Problem, dass das Wasser, das beim Absperren der Kaltwasser- oder Warmwasserseite zwischen den geschlossenen Rückflussverhinderern einerseits und einem ebenfalls geschlossenen Magnetventilsitz (entspricht dem Ventil-Absperrorgan) andererseits eingeschlossen ist, durch äußere Einflüsse ggf. stark aufgeheizt werden kann und damit an Volumen zunimmt. Dadurch entstehen an der Abströmseite des Rückflussverhinderers Systemdrücke, die zu Beschädigungen am Rückflussverhinderer und auch der Armatur führen können.

Aus der DE 101 15 588 B4 ist ein Rückflussverhinderer zur Installation in einer Flüssigkeitsleitung bekannt. Der Rückflussverhinderer weist ein Gehäuse auf, in dem ein Schließkörper hubverstellbar angeordnet ist. Bei Anliegen eines zuströmseitigen Flüssigkeits- Fließdruckes ist der Schließkörper in der Durchflussrichtung in seine Offenstellung verstellt, und zwar entgegen einer Federkraft sowie unter Freigabe einer Durchflussöffnung. Demgegenüber ist bei Wegfall des zuströmseitigen Flüssigkeits-Fließdruckes der Schließkörper in der Gegenrichtung mittels Federkraft-Wirkung in seiner Geschlossenstellung positioniert, in der die Durchflussöffnung gesperrt ist.

Der aus der DE 101 15 588 B4 bekannte Rückflussverhinderer weist zudem an seiner Abströmseite eine Druckausgleicheinrichtung mit einer Druckausgleichkammer auf. Bei Anliegen eines überhöhten abströmseitigen Flüssigkeitsdruckes am geschlossenen Rückflussverhinderer kann die abströmseitige Flüssigkeit in die Druckausgleichkammer eindringen und dadurch den abströmseitigen Flüssigkeitsdruck abbauen, um Beschädigungen am Rückflussverhinderer zu vermeiden. Die Druckausgleichkammer ist in der DE 101 15 588 B4 fertigungstechnisch aufwändig unmittelbar im Schließkörper integriert. Hierzu ist der Schließkörper zweiteilig aufgebaut, und zwar mit einer äußeren polsterförmigen Beschichtung und einem Grundkörper, der von der polsterförmigen Beschichtung überdeckt ist.

Aus der DE 10 2006 005 204 A1 ist eine Geräuschdämpfungseinsatz für Sanitärarmaturen bekannt, das einen aus gummielastischem Material hergestellten rohrartigen Formkörper aufweist, an dessen axial gegenüberliegenden Stirnseiten ringförmige Verdickungen vorgesehen sind, die radial nach außen gegen die Innenwandung der Flüssigkeitsleitung gepresst sind. Zur Verstärkung der ringförmigen Verdickungen sind im Formkörper Stützringe integriert. Diese begrenzen ein Fenster, in dem das durchströmende Wasser mit der gummielastischen Formkörper-Wandung in unmittelbarer Berührung steht. Durch Verformung des Formkörper-Materials im Bereich der Fenster ergibt sich eine geräuschdämpfende Wirkung.

Aus der DE 202 19 085 U1 ist ein gattungsgemäßer Rückflussverhinderer zur Installation in einer Flüssigkeitsleitung bekannt. Der Rückflussverhinderer ist als ein sanitäres Einbauteil mit einem Einbaugehäuse ausgeführt, das in eine sanitäre Wasserleitung einsetzbar ist.

Die Aufgabe der Erfindung besteht darin, einen Rückflussverhinderer zur Installation in einer Flüssigkeitsleitung bereitzustellen, der im Vergleich zum Stand der Technik fertigungstechnisch einfach herstellbar ist.

Die Aufgabe ist durch die Merkmale des Patentanspruches 1 gelöst. Bevorzugte Weiterbildungen der Erfindung sind in den abhängigen Ansprüchen offenbart.

Gemäß dem Patentanspruch 1 weist die Druckausgleicheinrichtung einen elastisch nachgiebigen Formkörper auf. Der Formkörper ist bevorzugt hülsenförmig ausgeführt und bei überhöhtem, abströmseitigen Flüssigkeitsdruck verformbar. Zudem ist der Formkörper in seiner Installationslage zwischen dem Rückflussverhinderer-Gehäuse und der Flüssigkeitsleitung angeordnet. Die Druckausgleichkammer, in der bei Anliegen eines überhöhten abströmseitigen Flüssigkeitsdruckes die abströmseitige Flüssigkeit eindringen kann, ist zwischen dem Rückflussverhinderer-Gehäuse und dem Formkörper definiert.

Der erfindungsgemäße Formkörper ist bei einem Flüssigkeitsdurchfluss in der regulären Durchflussrichtung in lösbarer Anlage mit dem Außendurchmesser des zylindrischen Rückflussverhinderer-Gehäuses. Bei Anliegen eines überhöhten abströmseitigen Flüssigkeitsdruckes dringt dagegen die abströmseitige Flüssigkeit in einen Spalt zwischen dem Rückflussverhinderer-Gehäuse und dem hülsenförmigen Formkörper ein, und zwar unter elastischer Verformung des Formkörpers sowie gleichzeitiger Ausweitung der Druckausgleichskammer.

In einer technischen Umsetzung kann der Formkörper aus einer gummielastischen Kunststoff-Weichkomponente, insbesondere aus einem Silikon, gebildet sein. Das Rückflussverhinderer-Gehäuse kann dagegen aus einer formstabilen Hartkomponente gebildet sein.

Eine montagetechnisch einfache sowie zuverlässige Positionierung des Rückflussverhinderers in der Flüssigkeitsleitung ist im Hinblick auf eine einfache Installation von großer Bedeutung. Zudem ist es für eine einwandfreie Funktionsfähigkeit von Vorteil, wenn der hülsenartige Formkörper radial nach außen flüssigkeitsdicht an der Innenwandung der Flüssigkeitsleitung anliegt. Vor diesem Hintergrund kann der hülsenartige Formkörper aus zum Beispiel Silikon an seinen axial gegenüberliegenden Stirnseiten jeweils ringförmige Verdickungen aufweisen, mit denen der Formkörper in der Installationslage flüssigkeitsdicht radial nach außen gegen die Innenwandung der Flüssigkeitsleitung gepresst ist. Im Bereich der Verdickungen können Stützringe integriert sein, um die Verdickungen auszusteifen. Die Stützringe können bevorzugt radial innen in Formschlussverbindung mit dem hülsenförmigen Formkörper sein.

Zudem kann der hülsenförmige Formkörper radial innen an der Abströmseite des Rückflussverhinderers eine Kraftangriffsfläche aufweisen, die gegenüber der abströmseitigen Flüssigkeit freigelegt ist. Das heißt, dass bei geschlossenem Rückflussverhinderer (dieser muss geschlossen sein, um einen abströmseitigen höheren Druck zu erlauben) der gegebenenfalls überhöhte abströmseitige Flüssigkeitsdruck direkt an der Kraftangriffsfläche des Formkörpers anliegt. In der Zusammenbaulage kann der abströmseitige Stützring mit Axialabstand vom Rückflussverhinderer-Gehäuse beabstandet sein. Das heißt, dass in diesem die oben definierte Kraftangriffsfläche in der Axialrichtung durch den abströmseitigen Stützring und durch das Rückflussverhinderer-Gehäuse begrenzt ist. Alternativ dazu können die oben erwähnten Stützringe konstruktiv auch durch andere Maßnahmen ersetzt werden.

Wie oben erwähnt, kann der hülsenförmige Formkörper an seinen axial gegenüberliegenden Stirnseiten jeweils eine Verdickung aufweisen. Zwischen den beiden Verdickungen kann sich ein Mittelbereich des Formkörpers erstrecken, in dem das Rückflussverhinderer-Gehäuse eingeschoben ist. Im Mittelbereich des hülsenförmigen Formkörpers kann zudem zumindest ein freier, luftgefüllter Verformungsraum integriert sein. Bei Anliegen eines überhöhten abströmseitigen Flüssigkeitsdruckes am geschlossenen Rückflussverhinderer kann eine Umfangswand des Formkörpers in diesen freien Verformungsraum hineinverlagert werden, und zwar unter Freigabe der oben erwähnten Druckausgleichkammer. Bevorzugt weist der hülsenförmige Formkörper am Außenumfang zum Beispiel drei gleichmäßig umfangsverteilte Verformungsräume auf, die über Axialstege voneinander beabstandet sind.

Der oben erwähnte Verformungsraum kann in einer technisch einfachen Ausführung eine am Außenumfang des Formkörpers im Bereich seines Mittelabschnittes gebildete Vertiefung sein, die im Vergleich zu den axial gegenüberliegenden Verdickungen durchmesserreduziert ist. Die Vertiefung definiert zusammen mit der Innenwandung der Flüssigkeitsleitung den Verformungsraum.

Im Hinblick auf eine einwandfreie Funktionsfähigkeit des Rückflussverhinderers ist eine flüssig keitsdichte Positionierung des Rückflussverhinderer-Gehäuses innerhalb des hülsenförmigen Formkörpers von großer Bedeutung. Hier kann zwischen dem radial inneren Rückflussverhinderer-Gehäuse und dem radial äußeren Formkörper eine Ringdichtung, das heißt ein O-Ring, zwischengeordnet sein. Zudem kann der zuströmseitige Stützring einen radial nach innen gerichteten Überstand aufweisen, an dem das Rückflussverhinderer-Gehäuse in Anlage kommen kann.

Die Erfindung und ihre vorteilhaften Aus- und Weiterbildungen sowie deren Vorteile sind nachfolgend anhand von Zeichnungen näher erläutert.

Es zeigen:
- Fig. 1: in einer perspektivischen Darstellung einen Rückflussverhinderer;
- Fig. 2: den Rückflussverhinderer in einer perspektivischen Schnittdarstellung;
- Fig. 3 und 4: schematischen Prinzipdarstellungen, die die Funktionsweise des Rückflussverhinderers veranschaulichen;
- Fig. 5: den Rückflussverhinderer in einer Installationslage sowie in seiner Offenstellung; und
- Fig. 6: in einer Ansicht entsprechend der Fig. 5 den Rückflussverhinderer in seiner Geschlossenstellung sowie bei Anliegen eines überhöhten abströmseitigen Flüssigkeitsdruckes.

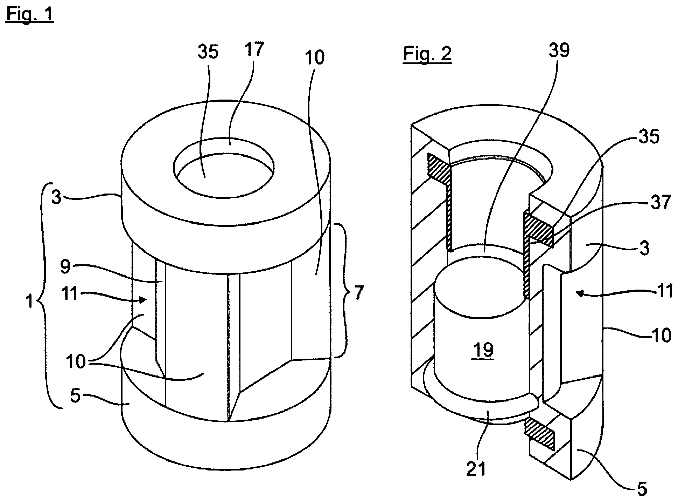

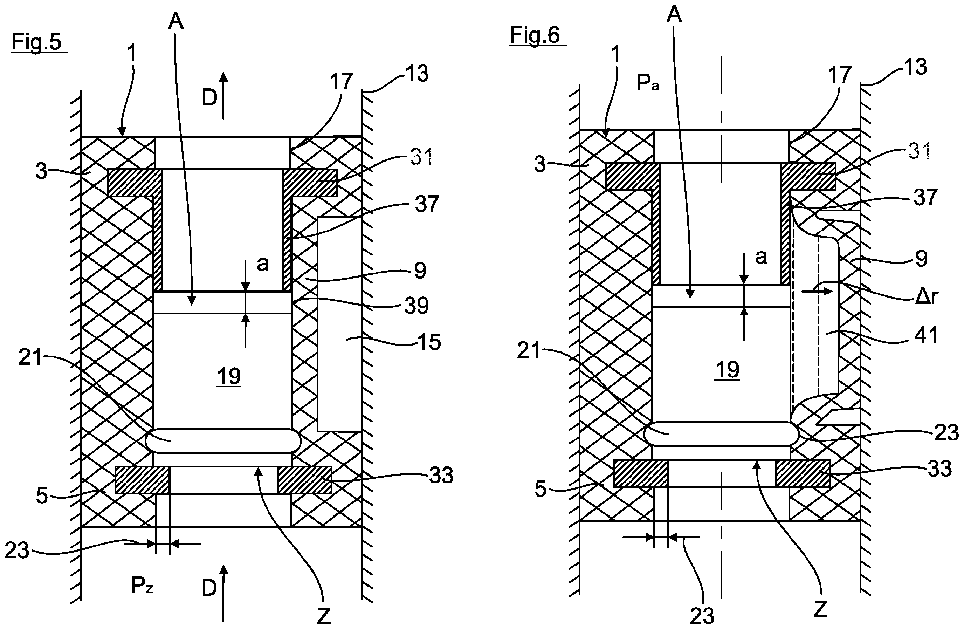

In den Fig. 1 und 2 ist ein Rückflussverhinderer jeweils in Alleinstellung, das heißt im ausgebauten Zustand gezeigt. Demzufolge weist der Rückflussverhinderer radial außen einen gummielastischen, hülsenförmigen Formkörper 1 auf, der beispielhaft aus einem Silikonmaterial hergestellt ist. Der Formkörper 1 weist an seinen axial gegenüberliegenden Stirnseiten jeweils eine ringförmige Verdickung 3, 5 auf. Zwischen den beiden Verdickungen 3, 5 erstreckt sich ein Mittelbereich 7, an dem der Formkörper 1 einen im Vergleich zu den Verdickungen 3, 5 durchmesserreduzierten Außenumfang 9 aufweist. Die beiden stirnseitigen Verdickungen 3, 5 sind über gleichmäßig umfangsverteilte Axialstege 10 miteinander in Verbindung, sodass sich insgesamt am Außenumfang 9 des Formkörpers 1 exemplarisch drei taschenförmige Vertiefungen 11 ergeben. In der, in den Figuren 5 und 6 gezeigten Installationslage definieren die Vertiefungen 11 im Formkörper 1 zusammen mit einer Innenwandung einer Flüssigkeitsleitung 13 später beschriebene Verformungsräume 15 (Fig. 5).

Der hülsenförmige Formkörper 1 weist an seiner Innenwandung 17 (Fig. 5) einen in Axialrichtung durchgängig konstanten Innendurchmesser auf. Innerhalb des hülsenförmigen Formkörpers 1 ist ein Rückflussverhinderer-Gehäuse 19 eingeschoben und an einer mittels eines O-Dichtringes 21 gebildeten Dichtzone flüssigkeitsdicht sowie ortsfest im hülsenförmigen Formkörper 1 gehaltert.

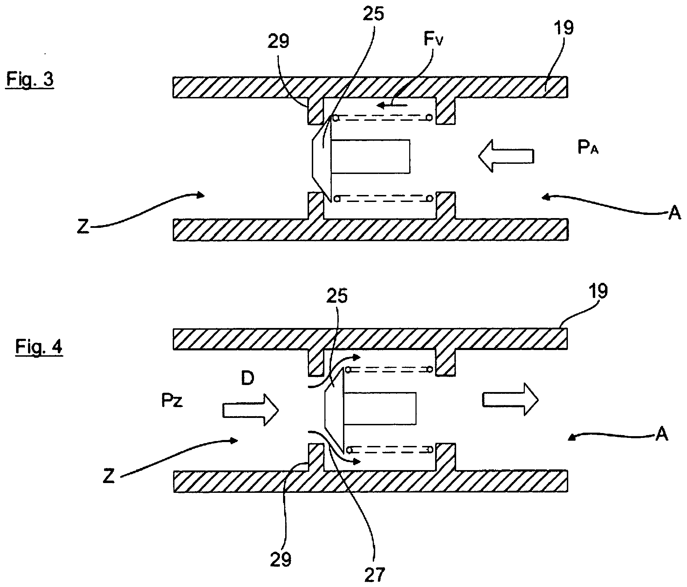

In dem, in den Fig. 2, 5 und 6 gezeigten Rückflussverhinderer-Gehäuse 19 ist ein in Axialrichtung hubverstellbarer Schließkörper 25 eingesetzt, wie er beispielhaft in den Fig. 3 oder 4 angedeutet ist, die die gängige Funktionsweise des Rückflussverhinderers veranschaulichen. So liegt in der Fig. 4 an der Zuströmseite Z des Rückflussverhinderers ein Flüssigkeits-Fließdruck p_{Z} an, wodurch sich der kegelförmige Schließkörper 25 in einer Durchflussrichtung D in seine Offenstellung (Fig. 4) verstellt, und zwar entgegen einer Federkraft F_{V} sowie unter Freigabe einer Durchlassöffnung 27 zwischen einem gehäuseseitigen Ventilsitz 29 und dem kegelförmigen Schließkörper 25. Bei Nichtvorliegen eines Flüssigkeits-Fließdruckes p_{Z} (Fig. 3) ist dagegen der Schließkörper 25 in der Gegenrichtung mittels Federkraft-Wirkung in seine Geschlossenstellung verstellt, bei der die Durchflussöffnung 27 gesperrt ist.

In der, in den Fig. 5 gezeigten Installationslage ist die reguläre Durchflussrichtung D von unten nach oben angedeutet, wobei an der Zuströmseite Z des Rückflussverhinderer-Gehäuses 19 ein Flüssigkeits-Fließdruck p_{Z} anliegt und die Durchflussöffnung 27 des Rückflussverhinderers geöffnet ist.

Zur Erhöhung der Bauteilsteifigkeit des Formkörpers 1 im Bereich seiner Verdickungen 3, 5 sind jeweils Stützringe 33, 35 bereitgestellt, die innenseitig im hülsenförmigen Formkörper 1 eingesetzt sind und jeweils die Verdickungen 3, 5 verstärken. Der in der Installationslage abströmseitige Stützring 35 ist mit einem rohrförmigen Fortsatz 37 in der Axialrichtung verlängert, der mit einem Axialabstand a (Fig. 5 oder 6) von dem Rückflussverhinderer-Gehäuse 19 beabstandet ist. Dadurch ergibt sich zwischen dem abströmseitigen Stützring 35 und dem Rückflussverhinderer-Gehäuse 19 ein umlaufendes Fenster, an dem die Innenwandung 17 des Formkörpers 1 freigelegt ist, und zwar unter Bildung einer Kraftangriffsfläche 39, an der gegebenenfalls der abströmseitige Flüssigkeitsdruck p_{A} anliegt. Die Innenwandung 17 des Formkörpers 1 ist in der Fig. 5 in loser Anlage mit dem Rückflussverhinderer-Gehäuse 19. Der zuströmseitige Stützring 33 überragt mit einem Überstand 23 die Innenwandung 17 des Formkörpers 1 radial nach innen. Der Überstand 23 des Stützrings 33 kann als axialer Bewegungsanschlag wirken, an dem das Rückflussverhinderer-Gehäuse 19 in Anlage kommen kann.

Im Unterschied zum Formkörper 1 sind die Stützringe 33, 35 sowie das Rückflussverhinderer-Gehäuse 19 nicht aus einer Weichkomponente, sondern vielmehr aus einer formstabilen Hartkomponente gebildet.

In der Fig. 5 ist der Rückflussverhinderer in seiner Offenstellung sowie in der regulären Durchflussrichtung D mit einer Flüssigkeit durchströmt, sodass an der Kraftangriffsfläche 39 des Formkörpers 1 unmittelbar der Flüssigkeits-Fließdruck p_{Z} anliegt. Druckschwankungen im Flüssigkeits-Fließdruck p_{Z} können daher unter elastischer Verformung des Außenumfangs 9 des Formkörpers 1 ausgeglichen werden, wodurch eine Geräuschdämpfung bewerkstelligt ist. In diesem Fall arbeitet der äußere Formkörper 1 des Rückflussverhinderers als ein Schalldämpfer.

In der Fig. 6 ist dagegen der Rückflussverhinderer geschlossen und liegt an der Abströmseite A des Rückflussverhinderers ein abströmseitiger Flüssigkeitsdruck p_{A} an. Im Falle eines überhöhten abströmseitigen Flüssigkeitsdruckes p_{A} wird der Außenumfang 9 des Formkörpers 1 an seiner Kraftangriffsfläche 39 um einen Radialversatz Δr nach außen in dem Verformungsraum 15 verdrängt, und zwar unter Freigabe einer Druckausgleichkammer 41 (Fig. 6) zwischen dem Rückflussverhinderer-Gehäuse 19 und der Innenwandung der Flüssigkeitsleitung 13. In diese Druckausgleichkammer 41 dringt die abströmseitige Flüssigkeit ein, wodurch der abströmseitige Flüssigkeitsdruck p_{A} abgebaut werden kann. Auf diese Weise ist zuverlässig eine Beschädigung des Rückflussverhinderers bei überhöhtem abströmseitigen Flüssigkeitsdruck p_{A}.

### Bezugszeichenliste

- 1: Formkörper
- 3, 5: Verdickungen
- 7: Mittelbereich
- 9: durchmesserreduzierter Außenumfang
- 10: Axialsteg
- 11: Vertiefungen
- 13: Flüssigkeitsleitung
- 15: Verformungsräume
- 17: Innenwandung
- 19: Rückflussverhinderer-Gehäuse
- 21: Dichtzone
- 23: Überstand
- 25: Schließkörper
- 27: Durchflussöffnung
- 29: Ventilsitz
- 33, 35: Stützringe
- 37: rohrförmiger Fortsatz
- 39: Kraftangriffsfläche
- 41: Druckausgleichkammer
- a: Axialabstand
- D: reguläre Durchflussrichtung
- A: Abströmseite des Rückflussverhinderers
- Z: Zuströmseite des Rückflussverhinderers
- p_{Z}: zuströmseitiger Flüssigkeits-Fließdruck
- p_{A}: abströmseitiger Flüssigkeitsdruck
- F_{V}: Federkraft

## Patentansprüche

1. Rückflussverhinderer zur Installation in einer Flüssigkeitsleitung (13), mit einem Gehäuse (19), in dem ein Schließkörper (25) hubverstellbar angeordnet ist, der bei Anliegen eines zuströmseitigen Flüssigkeits-Fließdrucks (p_{Z}) in einer Durchströmrichtung (D) in seine Offenstellung verstellt ist, in der entgegen einer Federkraft (F_{V}) eine Durchflussöffnung (27) freigegeben ist, und der in der Gegenrichtung mittels Federkraft-Wirkung in seine Geschlossenstellung verstellbar ist, in der die Durchflussöffnung (27) gesperrt ist, welcher Rückflussverhinderer an seiner Abströmseite (A) eine Druckausgleicheinrichtung aufweist, mittels der bei Anliegen eines überhöhten abströmseitigen Flüssigkeitsdruckes (p_{A}) die abströmseitige Flüssigkeit in eine Druckausgleichkammer (41) eindringt, und zwar unter Abbau des abströmseitigen Flüssigkeitsdruckes (p_{A}), wobei
die Druckausgleicheinrichtung einen bei überhöhtem abströmseitigen Flüssigkeitsdruck (p_{A}) verformbaren, insbesondere hülsenförmigen Formkörper (1) aufweist, der in einer Installationslage zwischen dem Rückflussverhinderer-Gehäuse (19) und der Flüssigkeitsleitung (13) angeordnet ist, und wobei die Druckausgleichskammer (41) zwischen dem Rückflussverhinderer-Gehäuse (19) und dem Formkörper (1) definiert ist, **dadurch gekennzeichnet, dass** der Formkörper (1) bei einem Flüssigkeitsdurchfluss in der Durchflussrichtung (D) in lösbarer Anlage mit dem Außenumfang des Rückflussverhinderer-Gehäuses (19) ist, und dass bei Anliegen eines überhöhten abströmseitigen Flüssigkeitsdruckes (pₐ) die abströmseitige Flüssigkeit in einen Spalt zwischen dem Rückflussverhinderer-Gehäuse (19) und dem Formkörper (1) eindringt, und zwar unter Verformung des Formkörpers (1) sowie gleichzeitiger Ausweitung der Druckausgleichkammer (41).

2. Rückflussverhinderer nach Anspruch 1, **dadurch gekennzeichnet, dass** der Formkörper (1) aus einer gummielastischen Kunststoff-Weichkomponente, insbesondere aus Silikon, gefertigt ist, und/oder dass das Rückflussverhinderer-Gehäuse (19) aus einer formstabilen Hartkomponente gebildet ist.

3. Rückflussverhinderer nach Anspruch 2, **dadurch gekennzeichnet, dass** der hülsenartige Formkörper (1) an seinen axial gegenüberliegenden Stirnseiten ringförmige Verdickungen (3, 5) aufweist, mit denen der Formkörper (1) in der Installationslage flüssigkeitsdicht radial nach außen gegen die Innenwandung (17) der Flüssigkeitsleitung (13) pressbar ist, und dass im Bereich der Verdickungen (3, 5) Stützringe (33, 35) integriert sind zur Versteifung der Verdickungen (3, 5).

4. Rückflussverhinderer nach Anspruch 3, **dadurch gekennzeichnet, dass** der Formkörper (1) radial innen an der Abströmseite (A) des Rückflussverhinderers mit einer Kraftangriffsfläche (39) gegenüber der abströmseitigen Flüssigkeit freigelegt ist, an der der abströmseitige Flüssigkeitsdruck (p_{A}) anlegbar ist.

5. Rückflussverhinderer nach Anspruch 4, **dadurch gekennzeichnet, dass** die Kraftangriffsfläche (39) in der Axialrichtung durch den abströmseitigen Stützring (35) und durch das Rückflussverhinderer-Gehäuse (19) begrenzt ist.

6. Rückflussverhinderer nach einem der Ansprüche 3, 4 oder 5, **dadurch gekennzeichnet, dass** der hülsenförmige Formkörper (1) in der Axialrichtung zwischen den beiden Verdickungen (3, 5) einen Mittelbereich (7) aufweist, in dem das Rückflussverhinderer-Gehäuse (19) angeordnet ist, und dass im Mittelbereich (7) des hülsenförmigen Formkörpers zumindest ein freier, luftgefüllter Verformungsraum (15) integriert ist, in den sich bei Anliegen eines überhöhten abströmseitigen Flüssigkeitsdruckes (p_{A}) eine Umfangswand des hülsenförmigen Formkörpers (1) hineinverlagert.

7. Rückflussverhinderer nach Anspruch 4 und 6, **dadurch gekennzeichnet, dass** der Außenumfang des Formkörpers (1) im Bereich seines Mittelabschnitts (7) im Vergleich zu den Verdickungen (3, 5) durchmesserreduziert ist, und zwar unter Bildung einer Vertiefung (11), die zusammen mit der Innenwandung der Flüssigkeitsleitung (13) den Verformungsraum (15) definiert.

8. Rückflussverhinderer nach einem der Ansprüche 3 bis 7, **dadurch gekennzeichnet, dass** das Rückflussverhinderer-Gehäuse (19) an einer Dichtzone (21) flüssigkeitsdicht im hülsenförmigen Formkörper (1) gehaltert ist.

9. Rückflussverhinderer nach einem der Ansprüche 3 bis 8, **dadurch gekennzeichnet, dass** ein zuströmseitiger Stützring (33) mit einem Überstand (23) die Innenwandung (17) des Formkörpers (1) radial nach innen überragt, und dass der Überstand (23) des Stützrings (33) als ein axialer Bewegungsanschlag wirkt, an dem das Rückflussverhinderer-Gehäuse (19) in Anlage bringbar ist.

## Claims

1. A backflow preventer for installation in a fluid line (13), having a housing (19) in which a closing body (25) is arranged in a stroke-adjustable manner, which is moved upon applying an upstream fluid flow pressure (p_{Z}) in a flow direction (D) into its open position, in which a passage opening (27) is unblocked against a spring force (F_{V}), and which can be moved in the opposite direction, by means of spring tension, into its closed position, in which the passage opening (27) is blocked, which backflow preventer has a pressure compensator on its downstream side (A), by means of which the downstream fluid enters a pressure compensation chamber (41) upon application of an excessive downstream fluid pressure (p_{A}), thereby diminishing the downstream fluid pressure (p_{A}), wherein the pressure compensator has a molded body (1), in particular sleeve-like molded body (1), which is deformable under excessive downstream fluid pressure (p_{A}) and which is arranged in an installation position between the backflow preventer housing (19) and the fluid line (13), and wherein the pressure compensation chamber (41) is defined between the backflow preventer housing (19) and the molded body (1), **characterized in that** the molded body (1) is in releasable contact with the outer periphery of the backflow preventer housing (19) in the event of a fluid flow in the flow direction (D), and that upon application of excessive downstream fluid pressure (p_{A}), the downstream fluid enters a gap between the backflow preventer housing (19) and the molded body (1), thereby deforming the molded body (1) and simultaneously widening the pressure compensation chamber (41).

2. The backflow preventer according to Claim 1, **characterized in that** the molded body (1) is produced from a resilient plastic soft component, in particular from silicone, and/or that the backflow preventer housing (19) is formed from a dimensionally stable hard component.

3. The backflow preventer according to Claim 2, **characterized in that** the sleeve-like molded body (1) has annular thickenings (3, 5) on its axially opposite end faces, with which the molded body (1), in the installation position, can be pressed radially outwardly in a fluid-tight manner against the inner wall (17) of the fluid line (13), and that support rings (33, 35) for reinforcing the thickenings (3, 5) are integrated in the area of the thickenings (3, 5).

4. The backflow preventer according to Claim 3, **characterized in that** the molded body (1) is exposed radially inwardly on the downstream side (A) of the backflow preventer to the downstream fluid, specifically with a force application surface (39) to which the downstream fluid pressure (p_{A}) can be applied.

5. The backflow preventer according to Claim 4, **characterized in that** the force application surface (39) is delimited in the axial direction by the downstream support ring (35) and by the backflow preventer housing (19).

6. The backflow preventer according to any one of Claims 3, 4 or 5, **characterized in that** the sleeve-like molded body (1) has, in the axial direction between the two thickenings (3, 5), a central area (7) in which the backflow preventer housing (19) is arranged, and that at least one unobstructed air-filled deformation space (15) is integrated in the central area (7) of the sleeve-like molded body, a peripheral wall of the sleeve-like molded body (1) shifting inwardly into said space upon application of excessive downstream fluid pressure (p_{A}).

7. The backflow preventer according to Claims 4 and 6, **characterized in that** the outer periphery of the molded body (1), in the area of its center section (7), is reduced in diameter in comparison to the thickenings (3, 5), thereby forming a hollow (11) which together with the inner wall of the fluid line (13) defines the deformation space (15).

8. The backflow preventer according to any one of Claims 3 to 7, **characterized in that** the backflow preventer housing (19) is mounted in a fluid-tight manner on a sealing zone (21) in the sleeve-like molded body (1).

9. The backflow preventer according to any one of Claims 3 to 8, **characterized in that** an upstream support ring (33) extends radially inwardly by a protrusion (23) beyond the inner wall (17) of the molded body (1), and that the protrusion (23) of the support ring (33) acts as an axial travel stop on which the backflow preventer housing (19) can be brought in abutment.

## Revendications

1. Dispositif anti-retour, destiné à être installé dans une conduite de liquide (13), pourvu d'un corps (19), dans lequel est placé en étant réglable en course un organe d'obturation (25), qui lors de l'application d'une pression d'écoulement d'un liquide (p_{z}) du côté affluence est réglé dans sa position ouverte dans une direction d'écoulement (D), dans laquelle à l'encontre d'une force de ressort (F_{V}) un orifice de passage (27) est libéré, et qui dans la direction opposée est réglable au moyen d'un effet de force de ressort dans sa position fermée, dans laquelle l'orifice de passage (27) est bloqué, lequel dispositif anti-retour comporte sur son côté d'écoulement (A) un système d'équilibrage de pression au moyen duquel, lorsqu'une pression de liquide (p_{A}) excessive est appliquée du côté d'écoulement, le liquide côté écoulement pénètre dans une chambre d'équilibrage de pression (41), et à savoir en supprimant la pression de liquide (p_{A}) du côté d'écoulement, le système d'équilibrage de pression comportant un corps moulé (1), notamment en forme de douille, déformable lorsque la pression de liquide (p_{A}) est excessive du côté d'écoulement, qui est placé dans une position d'installation entre le corps du dispositif anti-retour (19) et la conduite de liquide (13), et la chambre d'équilibrage de pression (41) étant définie entre le corps du dispositif anti-retour (19) et le corps moulé (1), **caractérisé en ce que** lors d'un écoulement de liquide dans la direction d'écoulement (D), le corps moulé (1) est en appui amovible avec la périphérie extérieure du corps du dispositif anti-retour (19), et **en ce que** lorsqu'une pression de liquide (pₐ) excessive est appliquée du côté d'écoulement, le liquide côté écoulement pénètre dans une fente entre le corps du dispositif anti-retour (19) et le corps moulé (1), et à savoir en déformant le corps moulé (1) et en élargissant simultanément la chambre d'équilibrage de pression (41) .

2. Dispositif anti-retour selon la revendication 1, **caractérisé en ce que** le corps moulé (1) est fabriqué dans un composant souple élastique caoutchouteux, notamment en silicone, et/ou **en ce que** le corps du dispositif anti-retour (19) est conçu en un composant dur, de forme stable.

3. Dispositif anti-retour selon la revendication 2, **caractérisé en ce que** le corps moulé (1) en forme de douille comporte sur ses faces frontales opposées en direction axiale des épaississements (3, 5) annulaires, par lesquels dans la position d'installation, le corps moulé (1) est susceptible d'être pressé de manière étanche au liquide vers l'extérieur en direction radiale contre la paroi intérieure (17) de la conduite de liquide (13), et **en ce que** dans la zone des épaississements (3, 5), des bagues d'appui (33, 35) sont intégrées pour renforcer les épaississements (3, 5).

4. Dispositif anti-retour selon la revendication 3, **caractérisé en ce que** le corps moulé (1) est mis à nu à l'intérieur en direction radiale sur le côté d'écoulement (A) du dispositif anti-retour sur une surface d'attaque de la force (39) par rapport au liquide côté écoulement, sur laquelle la pression de liquide (p_{A}) du côté écoulement est susceptible d'être appliquée.

5. Dispositif anti-retour selon la revendication 4, **caractérisé en ce que** la surface d'attaque de la force (39) est limitée dans la direction axiale par la bague d'appui (35) du côté d'écoulement et par le corps du dispositif anti-retour (19).

6. Dispositif anti-retour selon l'une quelconque des revendications 3, 4 ou 5, **caractérisé en ce que** le corps moulé (1) en forme de douille comporte dans la direction axiale entre les deux épaississements (3, 5) une zone médiane (7), dans laquelle est placé le corps du dispositif anti-retour (19), et **en ce que** dans la zone médiane (7) du corps moulé en forme de douille est intégré au moins un espace de déformation (15) libre, rempli d'air, à l'intérieur duquel lorsqu'une pression de liquide (p_{A}) excessive est appliquée du côté d'écoulement, une paroi latérale du corps moulé (1) se déplace.

7. Dispositif anti-retour selon la revendication 4 et 6, **caractérisé en ce que** la périphérie extérieure du corps moulé (1) présente dans la zone de son segment médian (7) un diamètre réduit en comparaison des épaississements (3, 5) et à savoir en formant un creux (11), qui conjointement à la paroi intérieure de la conduite de liquide (13) définit l'espace de déformation (15).

8. Dispositif anti-retour selon l'une quelconque des revendications 3 à 7, **caractérisé en ce que** sur une zone d'étanchéité (21), le corps du dispositif anti-retour (19) est maintenu de manière étanche au liquide dans le corps moulé (1) en forme de douille.

9. Dispositif anti-retour selon l'une quelconque des revendications 3 à 8, **caractérisé en ce qu'**une bague d'appui (33) du côté afflux déborde par un surplomb (23) vers l'intérieur en direction radiale de la paroi intérieure (17) du corps moulé (1), et **en ce que** le surplomb (23) de la bague d'appui (33) agit comme une butée de déplacement axiale, sur laquelle le corps du dispositif anti-retour (19) est susceptible d'être amené en appui.
